# EUROPÄISCHE PATENTANMELDUNG

(11) **EP 0 761 482 A1**
(43) Veröffentlichungstag der Anmeldung: **12.03.1997**
(21) Anmeldenummer: 96109904.1
(22) Anmeldetag: 20.06.1996
(51) Int. Cl.: B60G 17/027, B60G 17/044, B60G 17/015, F16F 13/00

(54) **Verstellbares Federbein für Kraftfahrzeuge**

(30) Priorität: 11.08.1995 DE 19529580
(71) Anmelder: August Bilstein GmbH, 58256 Ennepetal (DE); MERCEDES-BENZ AG, 70322 Stuttgart (DE)
(72) Erfinder: Huang, Zhen, Dr., 42389 Wuppertal (DE); Busch, Werner, 71384 Weinstadt (DE); Nagel, Günther, Dipl.-Ing., 73732 Esslingen (DE)

(57) **Zusammenfassung**

Verstellbares Federbein für Kraftfahrzeuge, wobei das Federbein (1) einen von einer Schraubenfeder (7) umgebenen Schwingungsdämpfer mit einem Dämpferzylinder (2) aufweist und ein den Dämpferzylinder in zwei Arbeitsräume unterteilender Arbeitskolben vorhanden ist, wobei der Arbeitskolben mit einer Kolbenstange (8) verbunden ist, die an einem Austrittsende des Dämpferzylinders durch ein dort angeordnetes Führungs- und Dichtungspaket austritt und an der Radmasse oder der Karosserie und der Dämpferzylinder mit seinem gegenüberliegenden Ende an dem jeweils komplementären Teil angelenkt ist, wobei die Schraubenfeder (7) einerseits durch einen mit dem Dämpferzylinder (2) über einen äußeren und einen inneren den Dämpferzylinder konzentrisch umgebenden Stellzylinder (10,9) verbundenen ersten Federteller (5) und andererseits durch einen in der Nähe des Anlenkungspunktes mit der Kolbenstange verbundenen zweiten Federteller (6) so gehalten und eingespannt ist, daß beim Einfahren des Kolbens in den Dämpferzylinder die Schraubenfeder (7) belastet wird, wobei die beiden Stellzylinder (9,10) zur Änderung des Bodenabstandes der Karosserie zueinander teleskopartig verschiebbar ausgebildet sind, wobei der erste Federteller (5) am äußeren Stellzylinder (10) befestigt ist und der äußere Stellzylinder (10) an seinem der Kolbenstange zugewandten Ende Einrichtungen zur Führung und Dichtung des Dämpferzylinders und an dem gegenüberliegenden Ende Einrichtungen zur Führung und Dichtung des inneren und am Dämpferzylinder befestigten Stellzylinders (9) aufweist, wobei der innere Stellzylinder (9) am Dämpferzylinder (2) befestigt und relativ zum äußeren Stellzylinder (10) durch das Einbringen eines Druckmediums in den von den Stellzylindern und dem Dämpferzylinder begrenzten ringförmigen Innenraum teleskopartig verschiebbar ist.

## Beschreibung

Die Erfindung betrifft ein verstellbares Federbein für Kraftfahrzeuge, wobei das Federbein einen von einer Schraubenfeder umgebenen Schwingungsdämpfer mit einem Dämpferzylinder aufweist und ein den Dämpferzylinder in zwei Arbeitsräume unterteilender Arbeitskolben vorhanden ist, wobei der Arbeitskolben mit einer Kolbenstange verbunden ist, die an einem Austrittsende des Dämpferzylinders durch ein dort angeordnetes Führungs- und Dichtungspaket austritt und an der Radmasse oder der Karosserie und der Dämpferzylinder mit seinem gegenüberliegenden Ende an dem jeweils komplementären Teil angelenkt ist, wobei die Schraubenfeder einerseits durch einen mit dem Dämpferzylinder über einen äußeren und einen inneren den Dämpferzylinder konzentrisch umgebenden Stellzylinder verbundenen ersten Federteller und andererseits durch einen in der Nähe des Anlenkungspunktes mit der Kolbenstange verbundenen zweiten Federteller so gehalten und eingespannt ist, daß beim Einfahren des Kolbens in den Dämpferzylinder die Schraubenfeder belastet wird, wobei die beiden Stellzylinder zur Änderung des Bodenabstandes der Karosserie zueinander teleskopartig verschiebbar ausgebildet sind.

Solche verstellbaren Federbeine dienen der Lageregelung/der Niveauregulierung von Fahrzeugen unter unterschiedlichen Belastungsbedingungen bzw. unter Voreinstellung bestimmter komfortabler Fahreigenschaften.

Die DE-AS 23 60 149 zeigt eine solche Einrichtung zur Niveauregelung für Kraftfahrzeuge, bei der ein Ende des Dämpferzylinders als Kolben eines zu dem dort verwendeten Teleskopstoßdämpfer in Reihe angeordneten Stellzylinders ausgebildet ist.

Das untere Ende des Stellzylinders ist dann mit der Radmasse verbunden, während die aus dem Teleskopstoßdämpfer austretende Kolbenstange mit der Karosserie verbunden ist. Zur Einspannung der zugehörigen Feder sind am Kolbenstangenende und am Außenumfang des Dämpferzylinders Federteller befestigt.

Durch die Beaufschlagung des Stellzylinders mit Hydraulikmedium wird der Abstand zwischen kolbenstangenseitigem Federteller, und somit der Karosserie, und dem Anlenkungspunkt der Radmasse vergrößert oder verkleinert.

Ein solches Federbein weist jedoch auch in einem Zustand einer vollständig abgesenkten Karosserie eine relativ große Bauhöhe auf, wodurch der Einbauraum vergrößert wird. Zudem muß der Dämpferzylinder des Teleskopstoßdämpfers auf seiner Außenseite in aufwendiger Weise mit einem mit Dichtungen versehenen Kolben ausgerüstet werden, so daß eine einwandfreie Funktion im zylindrischen Stellmotor gewährleistet ist. Der Fertigungsaufwand für einen solchen Dämpferzylinder steigt damit beträchtlich.

Ein weiterer Nachteil ergibt sich dadurch, daß bei einer derartigen Anordnung im Grunde zwei Dämpfer in Reihe geschaltet sind, d.h. daß sich die Dämpfungsrate des eigentlichen Teleskopschwingungsdämpfers der Dämpfungsrate des hydraulisch betriebenen Stellmotors überlagern und somit eine genaue Regelung bzw. eine genaue Voreinstellung der Gesamtdämpfung erschwert wird.

Die DE-OS 42 31 641 zeigt ein Federungssystem für Kraftfahrzeuge, wobei jedem Rad eine Feder sowie ein dazu in Reihe angeordnetes Hydraulikaggregat zugeordnet ist, mit dem sich der Bodenabstand des Fahrzeugaufbaus verändern läßt. Parallel zur Feder und auch zu dem in zur Feder in Reihe geschaltetem Hydraulikaggregat weist das Federungssystem einen Schwingungsdämpfer auf. Dieser Schwingungsdämpfer, der in allen Fahrzuständen einen ausreichenden Hub zur Verfügung haben muß, begrenzt dadurch, daß er mit Verstellung des Hydraulikaggregates ebenfalls verstellt wird, den maximalen Verschiebeweg bzw. maximalen Bodenabstand des Fahrzeugaufbaus.

Dieses bereits relativ ausgereifte Federungssystem weist jedoch eine weitere und durch die Bauweise gegebene Begrenztheit der Verschiebbarkeit auf, die im wesentlichen dadurch entsteht, daß das Hydraulikaggregat einen vollständigen und in sich geschlossenen Kolben-Zylinder-Aufbau mit den entsprechend umfangreich zu bearbeitenden und aufwendig herzustellenden einzelnen Bauteilen zeigt.

Der Erfindung lag also die Aufgabe zugrunde, ein verstellbares Federbein für Kraftfahrzeuge zu schaffen, welches mit einer möglichst geringen Bauhöhe und einem geringen Fertigungsaufwand kostengünstig herzustellen ist, welches die einzelnen Bauteile und deren Aufwand zur Herstellung auf ein Minimum reduziert und welches darüber hinaus eine genaue und sichere Lageregelung der abgefederten Kraftfahrzeugteile ermöglicht sowie eine definierte regel- und abstimmbare Dämpfungs- und Federrate aufweist.

Gelöst wird die Aufgabe durch die Merkmale des Hauptanspruchs. Vorteilhafte Ausbildungen sind in den Unteransprüchen beschrieben.

Hierbei ist der erste Federteller am äußeren Stellzylinder befestigt ist und der äußere Stellzylinder an seinem der Kolbenstange zugewandten Ende Einrichtungen zur Führung und Dichtung des Dämpferzylinders und an dem gegenüberliegenden Ende Einrichtungen zur Führung und Dichtung des inneren und am Dämpferzylinder befestigten Stellzylinders aufweist, wobei der innere Stellzylinder am Dämpferzylinder befestigt und relativ zum äußeren Stellzylinder durch das Einbringen eines Druckmediums in den von den Stellzylindern und dem Dämpferzylinder begrenzten ringförmigen Innenraum teleskopartig verschiebbar ist.

Durch diese Bauweise und Ausführung können alle für die Verstellbarkeit notwendigen Einrichtungen innerhalb des Innenradius der Schraubenfeder und direkt den eigentlichen Schwingungsdämpfer umgebend angeordnet werden, wodurch die Bauhöhe des Federbeins nicht beeinflußt wird. Damit ist unter anderem auch eine Nachrüstung möglich, bei der vorhandene Federbeine durch neue einstellbare Federbeine ersetzt werden können.

Ein weiterer Vorteil ergibt sich dadurch, daß das Maß der Verstellbarkeit trotz der geringen Bauhöhe sehr groß werden kann, da durch die den Dämpferzylinder und den inneren Stellzylinder übergreifende Ausbildung des äußeren Stellzylinders nahezu die gesamte Dämpferzylinderhöhe als Verschiebeweg für die Stellzylinder zur Verfügung steht. Die erfindungsgemäße Ausführung zeigt zudem wesentlich einfachere Bauteile als der Stand der Technik, da hier lediglich einfach herzustellende rohrförmige und mit wenigen Abstufungen versehene Zylinder genutzt werden.

Durch die erfindungsgemäße Befestigung des ersten Federtellers am äußeren Stellzylinder und durch die genannten Anordnungen der Einrichtungen zur Führung und Dichtung des Dämpferzylinders des Stellzylinders vereinfacht sich zum einen die Montage und es wird zum anderen eine sichere Führung und Abstützung der Zylinder ineinander gewährleistet. Der erste Federteller kann hierbei zudem in sehr einfachen Verfahren durch Aufschrumpfen oder Aufschweißen mit dem äußeren Stellzylinder verbunden werden.

Insgesamt ergibt sich durch eine solche Ausbildung eine Reduzierung der Gleit- und Dichtungselemente und in der Folge weniger Reibverschleiß zwischen den einzelnen Bauteilen.

Eine weitere vorteilhafte Ausbildung ergibt sich dadurch, daß der innere Stellzylinder an dem dem Austrittsende des Dämpferzylinders gegenüberliegenden Ende befestigt ist. Hierdurch erübrigen sich Schweißnähte oder Haltebauteile auf der Außenoberfläche des Dämpferzylinders, die aufgrund des von ihnen bewirkten Verzuges und der induzierten Kerbwirkungen die Fertigung erschweren.

Üblicherweise erfolgt eine solche Befestigung des Stellzylinders am Austrittsende mit Hilfe weiterer Verschlußteile. Eine besonders vorteilhafte Ausbildung ergibt sich dadurch, daß der innere Stellzylinder an seinem fest mit dem Dämpferzylinder verbundenen Ende ein einerseits mit der Radmasse oder der Karosserie und andererseits mit dem Dämpferzylinder verbindbares topfförmiges Verschlußteil aufweist.

Hierdurch erreicht man eine weitere Verringerung der Bauteile für das Federbein und kann gleichzeitig durch angepaßte Verschlußteile sämtliche Dicht- und Haltefunktionen für die Verstelleinrichtungen bereitstellen.

Ein weiterer Vorteil läßt sich dadurch erreichen, daß das topfförmige Verschlußteil über ein an dem dem Austrittsende des Dämpferzylinders gegenüberliegenden Ende befindliches rohrförmiges Anschlußteil mit dem Dämpferzylinder verbunden ist.

Ein solches rohrförmiges Anschlußteil erleichtert die Führung und die Zentrierung des Dämpferzylinders in Bezug auf die Stellzylinder und erlaubt es darüber hinaus, den Innenraum des rohrförmigen Teiles als Zuführung für Hydraulikmedium zu nutzen, wobei in einer weiteren vorteilhaften Ausbildung das topfförmige Verschlußteil und/oder das rohrförmige Anschlußteil die Zufuhreinrichtungen für das zur relativen Verschiebung der Stellzylinder notwendige Druckmedium aufweisen. Hierdurch entfallen etwa im Bereich der beweglichen Teile angeordnete Zufuhrleitungen, was den Verschleiß durch Wechselbelastungen deutlich erniedrigt.

Eine einfache Herstellbarkeit und eine auch im rauhen Betrieb unproblematische Konstruktion ergibt sich dadurch, daß die Zufuhreinrichtungen für das zur relativen Verschiebung der Stellzylinder notwendige Druckmedium axial in dem topfförmigen Verschlußteil und/oder dem rohrförmigen Anschlußteil angeordnet sind. Die Zuführungen können hierbei vollständig aus dem Radkasten herausgenommen und durch die feststehenden Teile der Karosserie geführt werden.

Ein vorteilhafter Einfluß insbesondere auf die einfache Vorfertigung von Komponenten ergibt sich, wenn das rohrförmige Anschlußteil als Teilbereich der Wand des Dämpferzylinders ausgebildet ist, wobei der die Arbeitsräume enthaltende Innenraum des Dämpferzylinders durch einen Deckel abgetrennt ist. Es entfällt dabei ein aufwendig auszubildender Verschluß bzw. Boden des Dämpferzylinders ebenso wie ein separat ausgebildetes und befestigtes rohrförmiges Anschlußteil.

Ein weiterer Vorteil einer solchen Federbeinkonstruktion besteht darin, daß die Bereiche zwischen dem der Kolbenstange zugewandten Ende des äußeren Stellzylinders und dem kolbenstangenseitigen Federteller und/oder zwischen dem gegenüberliegenden Ende des äußeren Stellzylinder und dem Verschlußteil durch elastische Schutzhüllen abgedeckt sind. Dadurch läßt sich Korrosions- und Atmosphäreneinfluß ebenso wie der Eintritt von Schmutzpartikeln und weiterer unerwünschter Medien praktisch auf null reduzieren, da der gesamte Dämpferzylinder und auch die kritischen Bereiche der Stellzylinder von elastischen Schutzhüllen, d.h. etwa von Faltehbälgen abdeckbar werden. Somit ist nicht nur der Stoßdämpfer selbst, sondern auch die gesamte Verstellmechanik sicher geschützt.

Vorteilhafterweise und zur Ausbildung einer exakten Regelung des verstellbaren Federbeins weisen die den Dämpferzylinder jeweils umgebenen Stellzylinder Meßeinrichtungen zur Messung des relativen Verschiebeweges zwischen den Stellzylindern auf.

Die hier verwendeten Sensoren und Meßwegaufnehmer können sich unterschiedlichsten physikalischen Prinzipien unterordnen, wobei im Regelfall der Geber oder der Sensor auf dem einen Stellzylinder und das jeweils komplementär zugehörige Bauteil auf dem anderen Stellzylinder angeordnet ist. Denkbar sind hier Spule-Magnet-Systeme, kapazitive Systeme, Wirbelstromsysteme etc.

Eine weitere vorteilhafte Ausbildung des Federbeins besteht darin, daß die Außenoberfläche des Dämpferzylinders verchromt ist. Hierdurch erreicht man eine auch nach langer Betriebszeit hervorragende Abdichtung zwischen den Einrichtungen zur Führung und Dichtung des Dämpferzylinders, welche an den Enden des äußeren Stellzylinders angeordnet sind. Der gleiche Effekt ergibt sich bei einer Verchromung der Außenoberfläche des inneren Stellzylinders.

Weiterhin ist es vorteilhaft, daß das der Austrittsseite der Kolbenstange zugewandte Ende des inneren Stellzylinders mindestens über Teilbereiche des Außenumfangs des Dämpferzylinders an der Außenoberfläche des Dämpferzylinders abgestützt ist. Hierdurch ergibt sich nicht nur eine sehr sichere und langlebige Führung des inneren Stellzylinders, es wird vielmehr auch eine größere Toleranz gegen etwa einwirkende Querkräfte erreicht, die dann durch die durch die Abstützung gewährte definierte Oberflächenanlage nicht mehr zu Oberflächenschädigungen des Dämpferzylinders bzw. der dort angeordneten Chromschicht führen können.

Vorteilhafterweise und zur Vereinfachung der Fertigung des inneren Stellzylinderrohres wird das der Austrittsseite der Kolbenstange zugewandte Ende des inneren Stellzylinders über einen endseitig im Stellzylinder eingesetzten Stützring abgestützt. Durch eine solche separate Ausbildung eines Stützringes kann man über eine geeignete Werkstoffwahl die Gleiteigenschaften positiv beeinflussen, etwa durch graphithaltige Sinterringe oder Teflonbeschichtungen.

Vorteilhaft in Bezug auf eine Abstimmung zwischen Verstellbarkeit und generellem Federungsverhalten des Kraftfahrzeuges wird als Schraubenfeder eine kegelstumpfförmige Feder eingesetzt, die eine nichtlineare Kennlinie aufweist, so daß im Zusammenhang mit der Einstellbarkeit eine merkbare Änderung des Fahrkomforts erfolgen kann.

Anhand eines Ausführungsbeispiels soll die Erfindung näher erläutert werden. Es zeigen
- Fig. 1: das erfindungsgemäße Federbein mit elastischen Schutzhüllen (Faltenbälgen), jedoch ohne Abstützung zwischen innerem Stellzylinder und Außenoberfläche des Dämpferzylinders
- Fig. 2: ein erfindungsgemäßes Federbein mit einer Abstützung zwischen innerem Stellzylinder und Außenoberfläche des Dämpferzylinders.

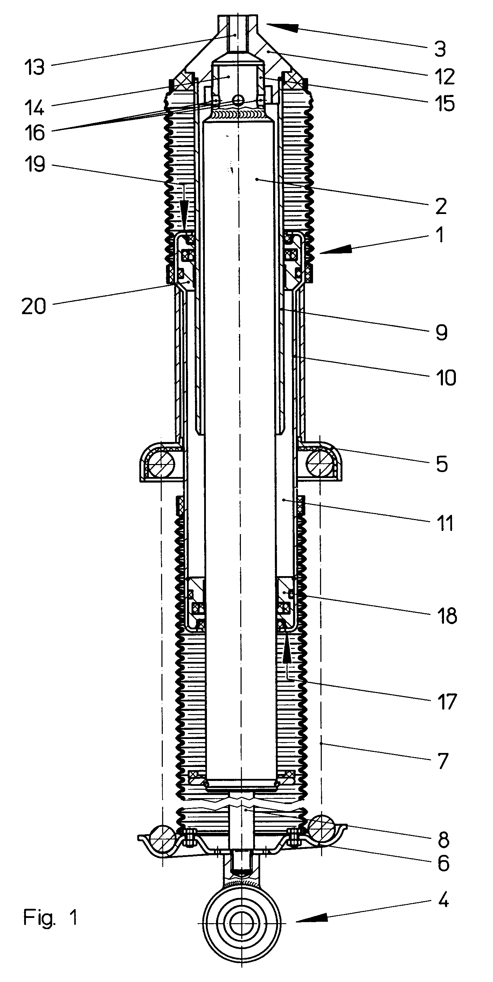

Die Fig. 1 zeigt ein erfindungsgemäßes Federbein, welches mit zwei zwischen dem äußeren Stellzylinder und den jeweiligen Endpunkten vorhandenen Faltenbälgen versehen ist. Dargestellt ist hier das Federbein 1 mit dem Dämpferzylinder 2, den oberen und unteren Anlenkpunkten 3 und 4 sowie der zwischen dem ersten Federteller 5 und dem zweiten Federteller 6 eingespannten Schraubenfeder 7.

Der zweite Federteller 6 ist hierbei in der Nähe des Anlenkpunktes 4 an der Kolbenstange 8 befestigt, während der erste Federteller 5 über einen inneren Stellzylinder 9 und einen äußeren Stellzylinder 10 mit dem Dämpferzylinder 2 verbunden ist.

Der innere und der äußere Stellzylinder sind relativ zueinander verschiebbar, wobei die Verschiebung teleskopartig erfolgt durch das Einbringen eines Druckmediums in den von den Stellzylindern 9 und 10 umgebenen ringförmigen Innenraum 11.

Das Einbringen des Druckmediums erfolgt hierbei über die axial im topfförmigen Verschlußteil 12 angebrachte Bohrung 13 und über den hohlen Innenraum 14 des rohrförmigen Anschlußteiles 15 und die darin vorhandenen Vertikalbohrungen 16.

Der äußere Stellzylinder 10 weist hierbei an seinem der Kolbenstange zugewandten Ende 17 Einrichtungen 18 zur Führung und Dichtung des Dämpferzylinders 2 und an seinem gegenüberliegenden Ende 19 Einrichtungen 20 zur Führung und Dichtung des inneren Stellzylinders 9 auf.

Der innere Stellzylinder 9 ist hierbei an dem dem Austrittsende des Dämpferzylinders gegenüberliegenden Ende fest mit dem Dämpferzylinder über das topfförmige Verschlußteil 12 verbunden. Gleichzeitig ist der innere Stellzylinder über das topfförmige Verschlußteil 12 mit der Karosserie verbunden, die hier nicht näher dargestellt ist.

Am Anlenkungspunkt 4 ist die Kolbenstange mit der ebenfalls nicht näher dargestellten Radmasse verbunden.

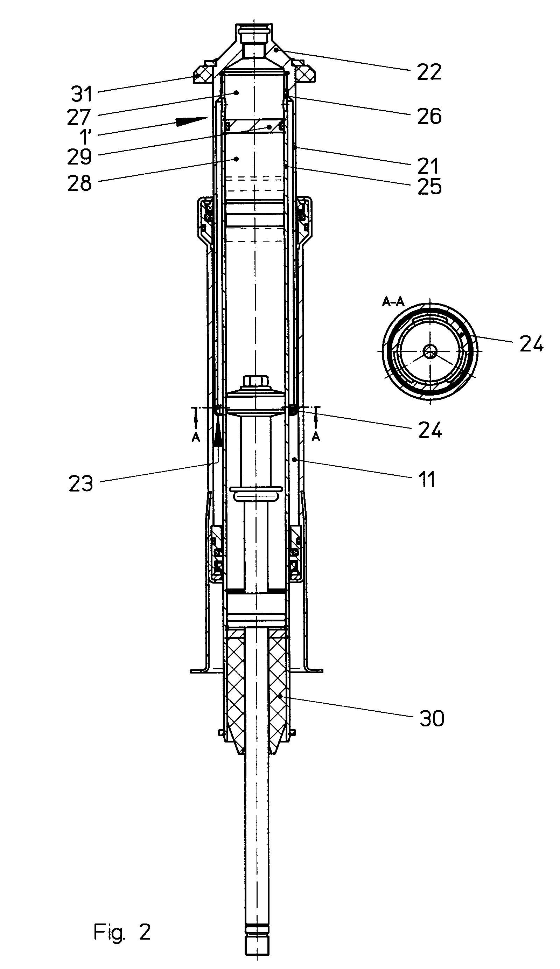

Die Fig. 2 zeigt eine Ausführung des erfindungsgemäßen Federbeins 1', bei der der hier gezeigte innere Stellzylinder 21 das topfförmige Verschlußteil 22 beinhaltet, was die Teilevielfalt im Vorbau reduziert.

Der innere Stellzylinder weist weiterhin an dem der Austrittsseite der Kolbenstange zugewandten Ende 23 einen Stützring 24 auf, welcher in dem zu der Fig. 2 gehörigen Schnitt A-A noch einmal näher dargestellt ist. Insbesondere erkennt man in diesem Schnitt, daß die Abstützung nur über Teilbereiche des Außenumfangs des Dämpfungszylinders erfolgt, wodurch ein ungehinderter Durchfluß des Druckmediums in den ringförmigen Zwischenraum 11 gewährleistet ist.

Als weitere Besonderheit beinhaltet der Dämpferzylinder 25 das rohrförmige Anschlußteil 26 als Teil seiner Außenwand. Der für den Mediumsdurchfluß notwendige Hohlraum 27 des rohrförmigen Anschlußteiles 26 ist von dem Arbeitsraum 28 des Dämpferzylinders durch einen abgedichteten und im Dämpferzylinder fixierten Deckel 29 abgetrennt. Auf eine nähere Darstellung der auch hier vorhandenen Schraubenfeder sowie auf eine Darstellung der Karosserie und der Radmasse wurde verzichtet. Das Federbein weist darüber hinaus die Anschlagstücke 30 und 31 aus gummielastischem Material auf.

### Bezugszeichenliste

- 1, 1': Federbein
- 2: Dämpferzylinder
- 3, 4: Anlenkpunkte
- 5: erster Federteller
- 6: zweiter Federteller
- 7: Schraubenfeder
- 8: Kolbenstange
- 9: innerer Stellzylinder
- 10: äußerer Stellzylinder
- 11: ringförmiger Innenraum
- 12: topfförmiges Verschlußteil
- 13: Bohrung
- 14: hohler Innenraum
- 15: rohrförmiges Anschlußteil
- 16: Vertikalbohrungen
- 17: kolbenstangenseitiges Ende des äußeren Stellzylinders
- 18: Führungs- und Dichtungseinrichtungen
- 19: kolbenstangenabgewandtes Ende des äußeren Stellzylinders
- 20: Führungs- und Dichtungseinrichtungen
- 21: innerer Stellzylinder
- 22: topfförmiges Verschlußteil
- 23: kolbenstangenseitiges Ende des inneren Stellzylinders
- 24: Stützring
- 25: Dämpferzylinder
- 26: rohrförmiges Anschlußteil
- 27: Hohlraum
- 28: Arbeitsraum
- 29: Deckel
- 30, 31: Anschlagstücke

## Patentansprüche

**1.** Verstellbares Federbein für Kraftfahrzeuge, wobei das Federbein (1) einen von einer Schraubenfeder umgebenen Schwingungsdämpfer mit einem Dämpferzylinder (2) aufweist und ein den Dämpferzylinder in zwei Arbeitsräume unterteilender Arbeitskolben vorhanden ist, wobei der Arbeitskolben mit einer Kolbenstange (8) verbunden ist, die an einem Austrittsende des Dämpferzylinders durch ein dort angeordnetes Führungs- und Dichtungspaket austritt und an der Radmasse oder der Karosserie und der Dämpferzylinder mit seinem gegenüberliegenden Ende an dem jeweils komplementären Teil angelenkt ist, wobei die Schraubenfeder (7) einerseits durch einen mit dem Dämpferzylinder (2) über einen äußeren und einen inneren den Dämpferzylinder konzentrisch umgebenden Stellzylinder verbundenen ersten Federteller (5) und andererseits durch einen in der Nähe des Anlenkungspunktes (3,4) mit der Kolbenstange (8) verbundenen zweiten Federteller (6) so gehalten und eingespannt ist, daß beim Einfahren des Kolbens in den Dämpferzylinder die Schraubenfeder (7) belastet wird, wobei die beiden Stellzylinder zur Änderung des Bodenabstandes der Karosserie zueinander teleskopartig verschiebbar ausgebildet sind,
**dadurch gekennzeichnet,**
daß der erste Federteller (5) am äußeren Stellzylinder (10) befestigt ist und der äußere Stellzylinder an seinem der Kolbenstange zugewandten Ende (17) Einrichtungen (18) zur Führung und Dichtung des Dämpferzylinders und an dem gegenüberliegenden Ende (19) Einrichtungen (29) zur Führung und Dichtung des inneren und am Dämpferzylinder (2) befestigten Stellzylinders (9) aufweist, wobei der innere Stellzylinder (9) am Dämpferzylinder (2) befestigt und relativ zum äußeren Stellzylinder (10) durch das Einbringen eines Druckmediums in den von den Stellzylindern (9,10) und dem Dämpferzylinder (2) begrenzten ringförmigen Innenraum (11) teleskopartig verschiebbar ist.

**2.** Verstellbares Federbein für Kraftfahrzeuge nach Anspruch 1,
**dadurch gekennzeichnet,**
daß der innere Stellzylinder (9) an dem dem Austrittsende des Dämpferzylinders (2) gegenüberliegenden Ende befestigt ist.

**3.** Verstellbares Federbein für Kraftfahrzeuge nach Anspruch 2,
**dadurch gekennzeichnet,**
daß der innere Stellzylinder (9) an seinem fest mit dem Dämpferzylinder verbundenen Ende ein einerseits mit der Radmasse oder der Karosserie und andererseits mit dem Dämpferzylinder verbindbares topfförmiges Verschlußteil (12) aufweist.

**4.** Verstellbares Federbein für Kraftfahrzeuge nach Anspruch 3,
**dadurch gekennzeichnet,**
daß das topfförmige Verschlußteil (12) über ein an dem dem Austrittsende des Dämpferzylinders gegenüberliegenden Ende befindliches rohrförmiges Anschlußteil (15,26) mit dem Dämpferzylinder verbunden ist.

**5.** Verstellbares Federbein für Kraftfahrzeuge nach Anspruch 4,
**dadurch gekennzeichnet,**
daß das rohrförmige Anschlußteil (15,26) als Teilbereich der Wand des Dämpferzylinders (25) ausgebildet ist, wobei der die Arbeitsräume (28) enthaltende Innenraum des Dämpferzylinders (25) durch einen Deckel (29) abgetrennt ist.

**6.** Verstellbares Federbein für Kraftfahrzeuge nach einem der Ansprüche 4 oder 5,
**dadurch gekennzeichnet,**
daß das topfförmige Verschlußteil (12) und das rohrförmige Anschlußteil (15,26) miteinander über eine Gewindeverschraubung verbunden sind.

**8.** Verstellbares Federbein für Kraftfahrzeuge nach einem der Ansprüche 5 bis 7,
**dadurch gekennzeichnet,**
daß das topfförmige Verschlußteil (12) und/oder das rohrförmige Anschlußteil (15,26) die Zufuhreinrichtungen (13,16) für das zur relativen Verschiebung der Stellzylinder (9,10) notwendige Druckmedium aufweisen.

**9.** Verstellbares Federbein für Kraftfahrzeuge nach Anspruch 8,
**dadurch gekennzeichnet,**
daß die Zufuhreinrichtungen (13,16) für das zur relativen Verschiebung der Stellzylinder notwendige Druckmedium axial in dem topfförmigen Verschlußteil (12) und/oder dem rohrförmigen Anschlußteil (15,26) angeordnet sind.

**10.** Verstellbares Federbein für Kraftfahrzeuge nach einem der vorhergehenden Ansprüche,
**dadurch gekennzeichnet,**
daß die Bereiche zwischen dem der Kolbenstange zugewandten Ende (17) des äußeren Stellzylinders und dem kolbenstangenseitigen Federteller und/oder zwischen dem gegenüberliegenden Ende (19) des äußeren Stellzylinder und dem Verschlußteil durch elastische Schutzhüllen abgedeckt sind.

**11.** Verstellbares Federbein für Kraftfahrzeuge nach einem der vorhergehenden Ansprüche,
**dadurch gekennzeichnet,**
daß die den Dämpferzylinder jeweils umgebenen Stellzylinder Meßeinrichtungen zur Messung des relativen Verschiebeweges zwischen den Stellzylindern aufweisen.

**12.** Verstellbares Federbein für Kraftfahrzeuge nach einem der vorhergehenden Ansprüche,
**dadurch gekennzeichnet,**
daß die Außenoberfläche des Dämpferzylinders (2,25) und/oder des inneren Stellzylinders (9,21) verchromt ist.

**13.** Verstellbares Federbein für Kraftfahrzeuge nach einem der vorhergehenden Ansprüche,
**dadurch gekennzeichnet,**
daß das der Austrittsseite der Kolbenstange zugewandte Ende (23) des inneren Stellzylinders (21) mindestens über Teilbereiche des Außenumfangs des Dämpferzylinders (25) an der Außenoberfläche des Dämpferzylinders abgestützt ist.

**14.** Verstellbares Federbein für Kraftfahrzeuge nach
Anspruch 13, **dadurch gekennzeichnet,**
daß das der Austrittsseite der Kolbenstange zugewandte Ende (23) des inneren Stellzylinders (21) über einen endseitig im Stellzylinder eingesetzten Stützring (24) abgestützt ist.

**15.** Verstellbares Federbein für Kraftfahrzeuge nach einem der vorhergehenden Ansprüche,
**dadurch gekennzeichnet,**
daß die Schraubenfeder (7) als kegelstumpfförmige Feder ausgebildet ist.
